(19) Europäisches Patentamt / European Patent Office / Office européen des brevets

(11) **EP 2 633 986 B1**

(12) **EUROPEAN PATENT SPECIFICATION**

(45) Date of publication and mention
of the grant of the patent:
**16.05.2018 Bulletin 2018/20**

(21) Application number: **11836488.4**

(22) Date of filing: **31.10.2011**

(51) Int Cl.:
*B29D 30/08* (2006.01)    *B29C 33/02* (2006.01)
*B29C 35/02* (2006.01)    *B29D 30/58* (2006.01)
*B60C 1/00* (2006.01)    *B60C 11/00* (2006.01)
*B29D 30/54* (2006.01)    *B29D 30/56* (2006.01)

(86) International application number:
**PCT/JP2011/075114**

(87) International publication number:
**WO 2012/057356 (03.05.2012 Gazette 2012/18)**

(54) **METHOD FOR PRODUCING BASE TIRE AND METHOD FOR PRODUCING TIME**

VERFAHREN ZUR HERSTELLUNG EINES BASISREIFENS UND VERFAHREN ZUR
HERSTELLUNG EINES REIFENS

PROCÉDÉ DE PRODUCTION DE PNEUMATIQUE DE BASE ET PROCÉDÉ RELATIF AU TEMPS
DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.10.2010 JP 2010244786
29.10.2010 JP 2010244783**

(43) Date of publication of application:
**04.09.2013 Bulletin 2013/36**

(73) Proprietor: **Bridgestone Corporation
Tokyo 104-8340 (JP)**

(72) Inventor: **KANOU, Motoaki
Kodaira-shi
Tokyo 187-8531 (JP)**

(74) Representative: **Lamb, Martin John Carstairs
Marks & Clerk LLP
90 Long Acre
London WC2E 9RA (GB)**

(56) References cited:
**EP-A1- 1 743 755    JP-A- 2002 069 237
JP-A- 2006 117 099    JP-A- 2009 051 481
JP-A- 2010 144 067**

**Description**

Technical Field

The present invention relates to a method for producing a tire casing and a method for producing a tire capable of improving the low-heat-generation property and the durability of the tire casing.

Background Art

Heretofore, for increasing automobile fuel economy, it is desired to reduce more the rolling resistance of tires. The rolling resistance of tires can be reduced by lowering the heat generation from the entire tire, and therefore it is desired to lower the heat generation from tires.

For lowering the heat generation from tires, compounding the tread rubber composition is mainly improved. As a method for reducing the amount of heat generation, it may be taken into consideration to use carbon black of low reinforceability and to reduce the amount of carbon black to be used, which, however, results in degradation of the necessary performance, durability. Accordingly, rubber excellent in low-heat-generation property and durability is needed.

For improving the durability of tires, it is desired to improve the crack growth resistance of the coating rubber composition for tire belt layers. For example, Patent Reference 1 discloses a proposal of improving belt durability by incorporating a bisphenol compound into a belt coating rubber composition to thereby improve the adhesiveness thereof to steel cords and the antiaging property thereof.

Also for improving the durability of tires, an attempt to improve the fracture resistance of belt under-cushion rubber has been made. For example, Patent Reference 2 discloses a belt under-cushion rubber comprising 100 parts by weight of a dienic rubber and from 0.5 to 10 parts by weight of a polymethoxymethylmelamine in which the number of the methoxymethyl groups is from 3 to 6 and the number of the methylol groups is from 0 to 3.

Patent Reference 3 proposes a belt under-cushion rubber comprising a rubber component of a dienic rubber and sulfur in a total sulfur content of from 1.5 to 4.0 parts by mass per 100 parts by mass of the rubber components, and further containing zinc oxide in such an amount that the ratio by mass of (zinc oxide/total sulfur content) could be at least 2.0 and containing an organic acid.

Recently, with the increase in the demand for resource saving in consideration of environmental implications, a retread technique of reusing tires of which the tread has worn away has become specifically noted. The retread technique is a technique of replacing the tread of used tires with a new tread portion. In such tires, needed is a tire casing of high durability that enables repeated retreading.

Regarding a method for producing a tire casing through two-stage vulcanization, for example, Patent Reference 4 proposes a tire production method, wherein the tire molding and vulcanizing step is divided into independent two stages A and B, in the stage A, the tire is so assembled as to comprise at least one carcass layer and at most a part of a tread strip as the outermost layer in the radial direction, and subsequently also the surface is vulcanized in a vulcanization mold capable of imparting a predetermined cross-sectional profile to one or a large number of strength carriers, and in the stage B, the tire part is also similarly vulcanized to thereby construct a complete tire.

Patent Reference 5 discloses a tire production method, wherein a partial tire is constructed in the step A and the partial tire is subsequently vulcanized, and in the step B, the whole or the remaining part of an unvulcanized tread is added to the partial tire and then vulcanized to give a complete tire, and wherein, in particular, the surface of the whole or the remaining part of the unvulcanized tread is at least partially plasma-treated.

Further, Patent Reference 6 proposes a tire production method, in which a two-stage vulcanization system is employed for passenger car tires, and which comprises a first vulcanization step of integrating a spiral reinforcing layer and a tread and then patterning the tread, and a second vulcanization step of setting the primary vulcanized product obtained in the first vulcanization step in the outer periphery of a radial carcass ply of a casing side member and then vulcanizing and molding it. JP2002-69237, EP 1 743 755 A1 and JP2010-144067 disclose methods of producing a tire.

However, according to these tire production methods, the rolling resistance of the tire could not be lowered and the durability thereof could not be improved. Accordingly, it is desired to improve tire production methods from the viewpoint of reducing the rolling resistance and improving the durability of tires.

Citation List

Patent References

Patent Reference 1: JP-A 2007-211152

Patent Reference 2: JP-A 2004-148986
Patent Reference 3: JP-A 2008-37310
Patent Reference 4: JP-A 08-258179
Patent Reference 5: JP-A 2000-79640
Patent Reference 6: JP-A 2006-111072

Summary of the Invention

Problems that the Invention is to Solve

An object of the present invention is to provide a method for producing a tire casing and a method for producing a tire capable of improving the low-heat-generation property and the durability of the tire casing and the tire.

Means for Solving the Problems

For solving the above-mentioned object, the present inventors have assiduously studied and, as a result, have found that, when a specific rubber composition is used in the method for producing a tire which comprises separately forming a tire casing and a precured tread member and then bonding the tire casing and the precured tread member and vulcanizing them to produce a tire, then the above-mentioned problems can be solved, and have completed the present invention.

Specifically, as one characteristic feature thereof, the present invention provides a method for producing a tire casing according to claim 1 by vulcanizing a casing portion comprising a belt portion composed of multiple belt layers, a side portion and a bead portion and also comprising at least any one of a tread casing and a belt under-cushion rubber, wherein a rubber composition containing carbon black having a nitrogen adsorption specific surface area of from 25 to 130 $m^2$/g as defined in JIS K 6217-2:2001 in an amount of from 25 to 45 parts by mass per 100 parts by mass of the rubber component therein is used as at least the rubber composition constituting the tread casing or the rubber composition constituting the belt under-cushion rubber, characterised in that the casing portion is vulcanized by surrounding the outside of the casing portion by the use of a vulcanization mold having a first heating means for heating the bead portion side of the casing portion and a second heating means for heating the belt portion side of the casing portion and wherein the quantity of heat per unit volume to be given to the belt portion side by the second heating means is smaller than the quantity of heat per unit volume to be given to the bead portion side by the first heating

The invention also relates to method for producing a tire according to claim 7.

Advantageous Effects of the Invention

According to the present invention, there is provided a method for producing a tire having improved low-heat-generation property and durability.

Brief Description of the Drawings

[Fig. 1] This is a schematic cross-sectional view showing one example of a tire obtained according to the production method of the present invention.

[Fig.2] This is an enlarged, schematic cross-sectional view showing one example of the bonded area of a tire obtained according to the production method of the present invention.

[Fig. 3] This is a schematic cross-sectional view showing one example of a tire casing and a precured tread member for use in the production method of the present invention.

[Fig. 4] This is a schematic cross-sectional view showing one example of a tire obtained according to the production method of the present invention.

[Fig. 5] This is a partly-cut, schematic cross-sectional view showing the belt portion of one example of a tire obtained according to the production method of the present invention.

[Fig. 6] This is a schematic cross-sectional view showing one example of a tire casing and a precured tread member for use in the production method of the present invention.

Mode for Carrying out the Invention

The method is described in detail hereinunder.

The production method for a tire casing of the present invention comprises vulcanizing a casing portion comprising a belt portion composed of multiple belt layers, a side portion and a bead portion and also comprising at least any one of a tread casing and a belt under-cushion rubber, wherein a rubber composition containing carbon black having a nitrogen adsorption specific surface area of from 25 to 130 m$^2$/g as defined in JIS K 6217-2:2001 in an amount of from 25 to 45 parts by mass per 100 parts by mass of the rubber component therein is used as at least the rubber composition constituting the tread casing or the rubber composition constituting the belt under-cushion rubber, characterised in that the casing portion is vulcanized by surrounding the outside of the casing portion by the use of a vulcanization mold having a first heating means for heating the bead portion side of the casing portion and a second heating means for heating the belt portion side of the casing portion and wherein the quantity of heat per unit volume to be given to the belt portion side by the second heating means is smaller than the quantity of heat per unit volume to be given to the bead portion side by the first heating means.

The production method for a tire of the present invention comprises separately forming a tire casing produced by vulcanizing a casing portion comprising a belt portion composed of multiple belt layers, a side portion and a bead portion and also comprising at least any one of a tread casing and a belt under-cushion rubber, and a precured tread member, and then bonding the tire casing and the precured tread member, and vulcanizing them, wherein a rubber composition containing carbon black having a nitrogen adsorption specific surface area of from 25 to 130 m$^2$/g as defined in JIS K 6217-2:2001 in an amount of from 25 to 45 parts by mass per 100 parts by mass of the rubber component therein is used as at least the rubber composition constituting the tread casing or the rubber composition constituting the belt under-cushion rubber, and wherein the ultimate temperature at the crown center position of the tread casing in bonding and vulcanizing the tire casing and the precured tread member is lower than the ultimate temperature at the crown center position of the tread casing in vulcanizing the casing portion.

The reason why the nitrogen adsorption specific surface area of the carbon black must be from 25 to 130 m$^2$/g is because, when it is less than 25 m$^2$/g, then it is difficult to fully secure the strength of the rubber composition constituting the tread casing and the rubber composition constituting the belt under-cushion rubber; but when more than 130 m$^2$/g, then the low-heat-generation property and the fatigue resistance of the rubber composition are insufficient and therefore it is difficult to improve the low-heat-generation property and the durability of the tire.

The reason why the amount of the carbon black to be incorporated must be from 25 to 45 parts by mass is because, when the amount is less than 25 parts by mass, then the strength of the rubber composition cannot be fully secured; but when more than 45 parts by mass, then the low-heat-generation property and the fatigue resistance of the rubber composition are insufficient and therefore it is difficult to improve the low-heat-generation property and the durability of the tire.

For example, in a tire having a thick-gauge tread portion such as a heavy loading tire or the like, the thermal conductivity in the tread portion is low, and therefore, when the tire of the type is produced through ordinary one-stage vulcanization, then the temperature increase inside the tire is slower than that on the surface side of the tire. Consequently, there may occur a difference between the rubber physical properties on the surface side of the vulcanized tire and the rubber physical properties inside the tire.

As opposed to this, according to the production method for a tire of the present invention, the casing portion that comprises a belt portion, a side portion and a bead portion and comprises at least any one of a tread casing and a belt under-cushion rubber, and the precured tread member are separately cured, and therefore in the production method, the temperature fluctuation mentioned above can be prevented from occurring during vulcanization and the rubber physical properties that the belt under-cushion and the tread casing have can be thereby effectively brought out. As a result, the low-heat-generation property of the tire the crack growth resistance after long-term use of the tire can be significantly improved.

[First Aspect of the Invention]

The production method for a tire casing of the first aspect of the present invention comprises vulcanizing a casing portion comprising a belt portion composed of multiple belt layers, a side portion, a bead portion and a tread casing, wherein a rubber composition containing carbon black having a nitrogen adsorption specific surface area of from 25 to 130 m$^2$/g as defined in JIS K 6217-2:2001 in an amount of from 25 to 45 parts by mass per 100 parts by mass of the rubber component therein is used as the rubber composition constituting the tread casing.

The production method for a tire of the first aspect of the present invention comprises forming a tire casing comprising a casing portion comprising a belt portion composed of multiple belt layers, a side portion and a bead portion and a tread casing to prepare a tire casing, vulcanizing a tread member comprising at least a tread portion to prepare a precured tread member, and thereafter bonding the tire casing and the precured tread member and integrally vulcanizing and molding them to give a tire, wherein a rubber composition containing carbon black having a nitrogen adsorption specific surface area of from 35 to 130 m$^2$/g as defined in JIS K 6217-2:2001 in an amount of from 25 to 45 parts by mass per 100 parts by mass of the rubber component therein is used as the rubber composition constituting the tread casing.

In this aspect, the precured tread member is a tread member that has been previously vulcanized. The tread casing is a rubber member that constitutes a tire casing and is arranged in the outermost layer in the tire radial direction of the tire casing to constitute the adhesive layer for bonding the precured tread member to the tire casing.

In the production method for a tire of the present invention, the tire casing and the tread member are separately produced and therefore the optimum vulcanization condition for the tread member can be defined separately from that for the tire casing. Combining the tire casing and the precured tread member each satisfying the individual vulcanization condition has made is possible to produce a tire satisfying both low-heat-generation property and durability.

The reason why the nitrogen adsorption specific surface area of the carbon black must be from 35 to 130 $m^2$/g is because, when it is at least 35 $m^2$/g, then the strength of the rubber composition can be secured; and when at most 130 $m^2$/g, then the low-heat-generation property and the fatigue resistance of the rubber composition are good and, falling within the range, the low-heat-generation property and the durability of the tire can be thereby improved. From these viewpoints, the nitrogen adsorption specific surface area is preferably within a range of from 60 to 90 $m^2$/g.

The reason why the amount of the carbon black to be incorporated must be from 25 to 45 parts by mass is because, when the amount is at least 25 parts by mass, then the strength of the rubber composition can be secured; and when at most 45 parts by mass, then the low-heat-generation property and the fatigue resistance of the rubber composition are good and, falling within the range, the low-heat-generation property and the durability of the tire can be thereby improved.

From the above-mentioned viewpoints, the amount of the carbon black to be incorporated is preferably within a range of from 28 to 40 parts by mass, more preferably from 30 to 35 parts by mass. In particular, when HAF (nitrogen adsorption specific surface area: 75 to 80 $m^2$/g) to be mentioned below is used as the carbon black, the amount thereof to be incorporated in the rubber composition is preferably from 28 to 32 parts by mass.

The vulcanization method for the tire production method of the present invention may be hereinafter referred to as "two-stage vulcanization". The conventional method of vulcanizing a raw tire in one stage may be hereinafter referred to as "one-stage vulcanization".

<Configuration of Tire>

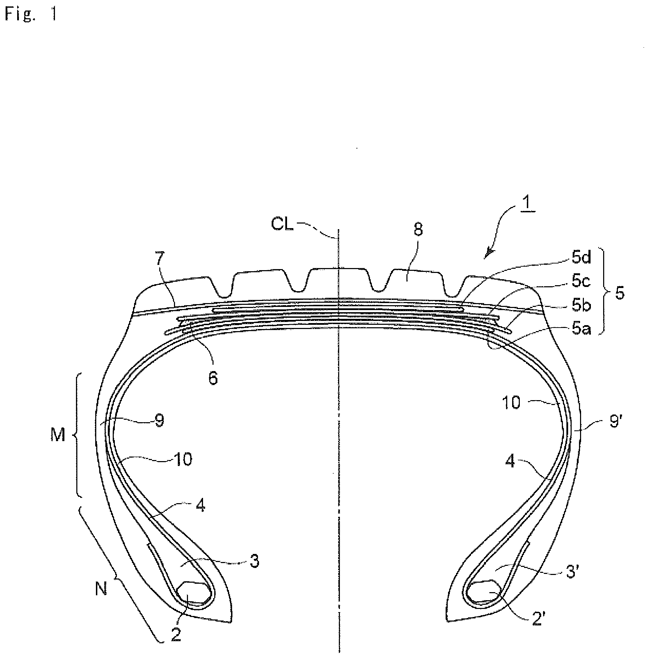

The members of the tire in the production method of the present invention are described below. Fig. 1 is a schematic cross-sectional view showing one example of a tire obtained according to the production method of the present invention.

In the tire 1 shown in Fig. 1, stiffeners 3 and 3' extend outside (upward in the drawing - the same shall apply hereinunder) in the tire radial direction from a pair of bead cores 2 and 2', respectively, and a belt portion 5 comprising multiple belt layers (four layers of 5a to 5d in Fig. 1) is arranged outside in the tire radial direction of the carcass ply 4 that is folded from the bead core 2 outside the stiffener 3 to form a toroidal tire casing form, folded at the bead core 2' on the opposite side and fixed outside the stiffener 3', thereby forming a tire casing. In the belt layers 5a to 5d (an innermost belt layer 5a, an inside belt layer 5b to form a crossing layer, an outside belt layer 5c to form a crossing layer, and an outermost belt layer 5d), in general, a belt wedge rubber 6 is arranged between the vicinity of the end of the inside belt layer 5b to form a crossing layer and the vicinity of the end of the outside belt layer 5c to form a crossing layer.

Outside in the tire radial direction of the belt portion 5, arranged is the tread portion 8 via the cushion rubber layer 7. The tread member 8 corresponds to the precured tread member in the present invention, and bonding to the tire casing, this forms the tire 1. Outside the carcass ply 4 and between the tread portion 8 and the stiffener 3, arranged is a sidewall rubber 9. The portion where the sidewall rubber 9 is arranged is referred to as a side portion M, and the inside portion in the tire radial direction of the side portion M (downward in the drawing - the same shall apply hereinunder) is referred to as a bead portion N. In the bead portion N, arranged are the bead cores 2 and 2', the stiffeners 3 and 3', etc. Inside the carcass ply 4, arranged is an inner liner 10 serving as an air penetration-preventing layer.

The bonding portion between the tire casing and the precured tread member is described in more detail.

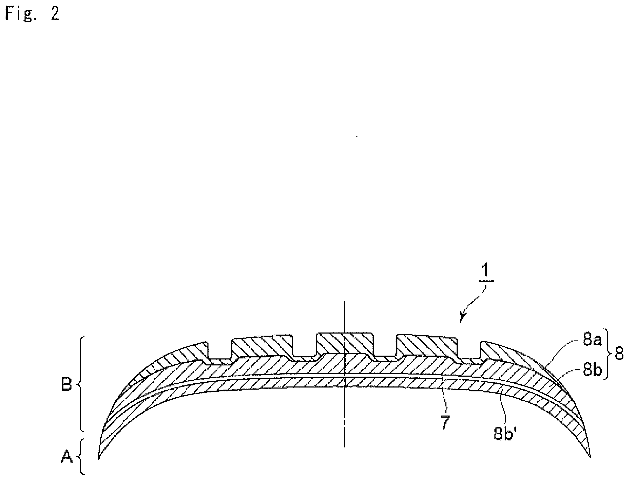

Fig. 2 is an enlarged view of the bonding portion. As shown in Fig. 2, the tread portion 8 has a two-layer configuration of a cap tread 8a and a base tread 8b (in Fig. 2, the belt layer is not shown). The tread portion 8 (precured tread member B) is bonded to the tire casing A via the cushion rubber layer 7.

In this embodiment, the tread casing 8b' is arranged in the outermost layer in the tire radial direction of the tire casing A. After the tread casing 8b' has been bonded to the tread portion 8 via the unvulcanized cushion rubber layer 7, these are vulcanized and the tread casing 8b' forms a part of the tread portion 8. In the present invention, as the rubber composition to constitute the tread casing 8b', used is the rubber composition containing the above-mentioned specific carbon black.

In the configuration of Fig. 2, the composition of the tread casing 8b' is the same as that of the base tread 8b, or that is, the tread casing 8b' is formed of the same rubber composition as that of the base tread 8b, and those two parts bonding together form the integrated base tread.

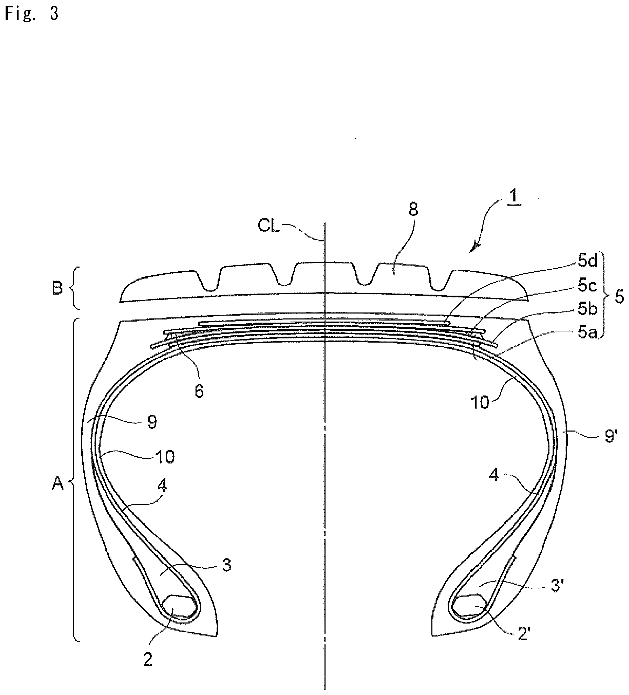

Fig. 3 is a schematic cross-sectional view showing one example of the tire casing A and the precured tread member B for use in the production method of the present invention. In this embodiment, the casing portion comprising at least the belt portion 5, the side portion M, the bead portion N and the tread casing 8b' is vulcanized to form the tire casing A.

In the tire casing A, in general, a thin layer of a part of tread rubber is arranged outside the tire radial direction of the belt portion 5. This is for bettering the bonding of the tire casing to the precured tread member B. The precured tread member B is formed by vulcanizing the tread member having the tread portion 8.

<Rubber Composition Constituting Tread Casing>

(Carbon Black)

In this embodiment, the rubber composition to constitute the unvulcanized tread casing contains carbon black having a nitrogen adsorption specific surface area of from 35 to 130 $m^2/g$ as defined in JIS K 6217-2:2001.

As the carbon black, for example, there are mentioned HAF (nitrogen adsorption specific surface area: 75 to 80 $m^2/g$), HS-HAF (nitrogen adsorption specific surface area: 78 to 83 $m^2/g$), LS-HAF (nitrogen adsorption specific surface area: 80 to 85 $m^2/g$), FEF (nitrogen adsorption specific surface area: 40 to 42 $m^2/g$), GPF (nitrogen adsorption specific surface area: 26 to 28 $m^2/g$), N339 (nitrogen adsorption specific surface area: 88 to 96 $m^2/g$), LI-HAF (nitrogen adsorption specific surface area: 73 to 75 $m^2/g$), IISAF (nitrogen adsorption specific surface area: 97 to 98 $m^2/g$), HS-IISAF (nitrogen adsorption specific surface area: 98 to 99 $m^2/g$), ISAF (nitrogen adsorption specific surface area: 110 to 125 $m^2/g$), etc. Of those, preferred are HAF (nitrogen adsorption specific surface area: 75 to 80 $m^2/g$), HS-HAF (nitrogen adsorption specific surface area: 78 to 83 $m^2/g$), LS-HAF (nitrogen adsorption specific surface area: 80 to 85 $m^2/g$), FEF (nitrogen adsorption specific surface area: 40 to 42 $m^2/g$) and LI-HAF (nitrogen adsorption specific surface area: 73 to 75 $m^2/g$).

More preferably, the nitrogen adsorption specific surface area of the carbon black is from 60 to 90 $m^2/g$).

(Silica)

In this embodiemnt, if desired, silica may be incorporated in the rubber composition to constitute the tread casing, in addition to the carbon black mentioned above. Preferably, silica is incorporated in an amount of at most 10 parts by mass per 100 parts by mass of the rubber component in the rubber composition.

Any commercially-available silica is usable here, but above all, preferred is precipitated silica, fumed silica or colloidal silica, and more preferred is precipitated silica. Preferably, the BET specific surface area (as measured according to ISO 5794/1) of silica for use herein is from 40 to 350 $m^2/g$. Silica of which the BET specific surface area falls within the range is advantageous in that it satisfies both rubber-reinforcing capability and dispersibility in the rubber component. From this viewpoint, silica of which the BET specific surface area falls within a range of from 80 to 350 $m^2/g$ is more preferred; silica of which the BET specific surface area falls within a range of from 120 to 350 $m^2/g$ is even more preferred. As silicas of those types, usable here are commercial products of Tosoh Silica's trade names "Nipsil AQ" (BET specific surface area = 220 $m^2/g$) and "Nipsil KQ"; Degussa's trade name "Ultrasil VN3" (BET specific surface area - 175 $m^2/g$), etc.

(Rubber Component)

As the rubber component for use in the rubber composition to constitute the tread casing in the present invention, preferred is any one of natural rubber and synthetic polyisoprene rubber (IR), and more preferred is natural rubber. In combined use with any other synthetic rubber, it is desirable that natural rubber accounts for at least 60% by mass of the rubber component, more preferably at least 70% by mass, even more preferably at least 80% by mass. Especially preferred is use of natural rubber alone.

The other synthetic rubber includes polybutadiene rubber (BR), styrene-butadiene copolymer (SBR), styrene-isoprene copolymer (SIR), etc.

(Vulcanizing Agent)

Preferably, in the rubber composition to constitute the tread casing in the present invention, sulfur is incorporated as a vulcanizing agent, in an amount of at most 7.0 parts by mass per 100 parts by mass of the rubber component therein. More preferably, the amount falls within a range of from 1.0 to 7.0 parts by mass, even more preferably from 1.0 to 3.0 parts by mass. Incorporating sulfur in an amount of at most 7.0 parts by mass can favorably prevent the aging resistance of the rubber composition from lowering. Incorporating sulfur in an amount of at least 1.0 part by mass is more preferred as improving the initial adhesiveness of the composition.

(Other Additives)

In addition to the above-mentioned components, any other additives, for example, a vulcanization activator such as zinc flower, organic acid (stearic acid, etc.) or the like, a vulcanization accelerator, an inorganic filler except silica, an antiaging agent, an ozone degradation inhibitor, a softening agent or the like may be added to the rubber composition to constitute the tread casing in the present invention.

As the vulcanization accelerator, preferably used here is a sulfenamide-type accelerator such as N,N'-dicyclohexyl-2-benzothiazolylsulfenamide, N-cyclohexyl-2-benzothiazolylsulfenamide, N-tert-butyl-2-benzothiazolylsulfenamide, N-oxydiethylene-2-benzothiazolylsulfenamide, etc. If desired, also usable are a thiazol-type accelerator such as 2-mercaptobenzothiazole, di-2-benzothiazolyl disulfide, etc.; a thiuram-type accelerator such as tetrabenzylthiuram disulfide, tetramethylthiuram disulfide, tetraethylthiuram disulfide, tetrakis(2-ethylhexyl)thiuram disulfide, tetramethylthiuram monosulfide, etc.

As commercial products of vulcanization accelerators, usable here are N-cyclohexyl-2-benzothiazolylsulfenamide (Ouchi Shinko Chemical Industry's trade name "Nocceler CZ) and N,N-dicyclohexyl-2-benzothiazolylsulfenamide (Ouchi Shinko Chemical Industry's trade name "Nocceler DZ).

The amount of the antiaging agent to be incorporated is preferably from 1 to 3 parts by mass per 100 parts by mass of the rubber component in the composition.

<Vulcanizate Physical Property of Rubber Composition Constituting Tread Casing>

Tan$\delta$ of the rubber composition to constitute the tire casing is preferably at most 0.09 from the viewpoint of improving the low-heat-generation property of the composition.

<Production Method for Tire>

(Production of Tire Casing)

In producing the rubber composition in the present invention, used is a Banbury mixer, a roll, an intensive mixer or the like as the kneading apparatus.

In case where the casing portion is vulcanized in producing the tire casing A in the production method of the present invention, first an unvulcanized casing portion is formed. The casing portion can be formed in the same manner as that for a forming process for a green tire in a known tire production method. For example, a carcass ply rubberized with unvulcanized rubber is wound around a forming drum, a bead core is set around both ends thereof, and thereafter the two ends are folded, and further unvulcanized rubber of a sidewall portion is stuck thereto. Next, the center part in the width direction is expanded to form a toroidal form of which the cross section is horseshoe, and thereafter an unvulcanized belt layer is arranged around the outer periphery of the carcass layer, and a thin layer of the tread casing 8b' formed of the rubber composition containing the specific carbon black mentioned above is stuck thereonto to provide a casing portion.

The casing portion is set in a vulcanization device (mold), and vulcanized and molded therein to thereby produce the tire casing A having the tread casing 8b' to be a part of the tread portion 8.

In the production method of the present invention, the vulcanization method for the casing portion (unvulcanized tire casing A) is a method of surrounding the outside of the casing portion by the use of the vulcanization mold, and the casing portion is vulcanized and molded in such a manner that the bead portion side of the casing portion is heated by a first heating means, the belt portion side of the casing portion is heated by a second heating means, and the quantity of heat per unit volume to be given to the belt portion side by the second heating means is smaller than the quantity of heat per unit volume to be given to the bead portion side by the first heating means.

In ordinary heavy loading tires (for example, pneumatic radial tires for trucks or busses), the thickness of the belt portion side of the casing portion is small as compared with the maximum thickness of the bead portion N in Fig. 1, and therefore there exists a latest vulcanization point inside the bead portion N. As described above, when a small quantity of heat per unit volume is given to the belt portion side and a large quantity of heat per unit volume is given to the bead portion side, then the belt portion side is not overvulcanized, and favorably as a result, the adhesiveness between the tread casing 8b' and the tread portion 8 (both the initial adhesiveness and the adhesiveness after long-term use) betters, tan$\delta$ of the rubber composition to constitute the tread casing 8b' lowers and the low-heat-generation property of the composition betters.

Regarding the means of imparting a small quantity of heat per unit volume to the belt portion side and imparting a large quantity of heat per unit volume to the bead portion side, in case where the casing portion is vulcanized to produce the tire casing A, for example, the casing portion is put into a vulcanization mold, and pressure and heat are given thereto from inside the casing portion by the use of a vulcanization bladder therein. In this case, from the first heating means for the part of the vulcanization mold that faces the bead portion N of the casing portion, the casing portion may be heated at a higher temperature, and from the second heating means for the part of the vulcanization mold that faces the belt portion side of the casing portion, the casing portion may be heated at a lower temperature than from the first heating means.

In the production method of the present invention, preferably, the ultimate temperature at the crown center position of the tread casing 8b' during vulcanization of the casing portion is from 110 to 160°C, and the ultimate temperature of the bead portion N (especially the latest vulcanization point of the bead portion N - the same shall apply hereinunder) is from 125 to 180°C, and the ultimate temperature at the crown center position of the tread casing 8b' is higher by from 2 to 25°C than the ultimate temperature at the bead portion N.

When the ultimate temperature at the crown center position of the tread casing 8b' is 110°C or higher, then the vulcanization can go on favorably; and when 160°C or lower, then the initial adhesiveness between the tread casing 8b' and the belt portion 5 can favorably better. When the ultimate temperature of the bead portion N is 125°C or higher, then the vulcanization time for the tire casing A can be favorably shortened; and when 180°C or lower, the durability of the bead portion can favorably better. Further, from the viewpoint of preventing the belt portion side from being overvulcanized to thereby improve the initial adhesiveness between the tread casing 8b' and the belt portion 5 and the low-heat-generation property of the tire, preferably, the ultimate temperature at the crown center position of the tread casing 8b' is lower by from 2 to 25°C than the ultimate temperature of the bead portion N, more preferably by from 4 to 25°C, even more preferably by from 4 to 20°C.

(Production of Precured Tread Member)

In case where the precured tread member B is produced, a tread material of an unvulcanized rubber of which the cross section in the width direction is nearly trapezoidal is extruded through an extruder (not shown), and then cut in a predetermined length, and thereafter the thus-cut strip-shaped tread material is set in a vulcanization mold composed of, for example, an upper mold portion and a lower mold potion, and vulcanized therein to give a ring-shaped precured tread member B. In this stage, formed are multiple grooves each extending in the lengthwise direction of the ring-shaped outer surface of the precured tread member B.

As the tread material especially for the base tread, the above-mentioned rubber composition in the present invention may be used.

(Bonding of Tire Casing and Precured Tread Member)

In the tire casing A and the precured tread member B produced in the manner as above, the tire casing surface that has been kept in contact with the mold surface during vulcanization has the property of hardly crosslinking with the unvulcanized rubber, and therefore for removing (cutting off) the surface layer rubber of the outer surface to be the adhesive face between the tire casing A and the precured tread member B for the purpose of securing the adhesiveness therebetween, it is desirable that the adhesive face between the tire casing A and the precured tread member B is previously buffed by the use of a buffing machine or the like.

Next, the tire casing A and the precured tread member B are bonded together and integrally vulcanized and molded to give the tire 1. In this stage, it is desirable that the tire casing A and the precured tread member B are bonded via an unvulcanized cushion rubber layer 7, and vulcanized and molded. The unvulcanized cushion rubber layer 7 may be an ordinary sheet-like cushion rubber, or a liquid rubber may be applied to the adhesive face to form the unvulcanized cushion rubber layer thereon.

In the rubber composition, if desired, various chemicals used in ordinary rubber industry, such as carbon black as a reinforcing filler, as well as a softening agent (oil), an antiaging agent, a crosslinking agent such as sulfur or the like may be suitably incorporated, in addition to rubber components, various vulcanization accelerator components and a crosslinking component used in ordinary rubber compositions. As the rubber component, usable is natural rubber (NR) or synthetic rubber either singly or as combined. The synthetic rubber includes, for example, synthetic polyisoprene rubber, polybutadiene rubber (BR), styrene-butadiene rubber (SBR), butyl rubber, halogenobutyl rubber, etc. As the rubber composition, preferred here is use of a tread rubber composition (especially tread base rubber composition).

Next, the tire casing A to which the precured tread member B has been stuck is conveyed into a vulcanization apparatus not shown (for example, a vulcanizer or a steam pan), in which the unvulcanized cushion rubber layer is vulcanized to give the tire 1. In this stage, the precured tread member B is co-vulcanized and bonded to the outer periphery of the crown portion of the tire casing A.

The vulcanization condition is preferably at from 60 to 140°C or so and for a period of time for which the cushion rubber can be completely vulcanized.

During the vulcanization, it is desirable that the ultimate temperature at the crown center position of the tread casing 8b' in bonding the tire casing A and the precured tread member B together and integrally vulcanizing them is lower than the ultimate temperature at the crown center position of the tread casing 8b' in vulcanizing the casing portion. This is for the purpose of optimizing the degree of vulcanization in vulcanizing the casing portion and the total degree of vulcanization in vulcanizing the tire casing A and the precured tread member B so that they could not be excessively too high, whereby the initial adhesiveness between the tread casing 8b' and the tread portion 8, and the low-heat-generation property and the durability of the tire can be bettered.

[Second Aspect of the Invention]

The production method for a tire casing of the second aspect of the present invention comprises vulcanizing a casing portion comprising a belt portion composed of multiple belt layers, a belt under-cushion rubber, a side portion, and a bead portion, wherein a rubber composition containing carbon black having a nitrogen adsorption specific surface area of from 25 to 130 m$^2$/g as defined in JIS K 6217-2:2001 in an amount of from 25 to 45 parts by mass per 100 parts by mass of the rubber component therein is used as the rubber composition constituting the belt under-cushion rubber, characterised in that the casing portion is vulcanized by surrounding the outside of the casing portion by the use of a vulcanization mold having a first heating means for heating the bead portion side of the casing portion and a second heating means for heating the belt portion side of the casing portion and wherein the quantity of heat per unit volume to be given to the belt portion side by the second heating means is smaller than the quantity of heat per unit volume to be given to the bead portion side by the first heating means.

The production method for a tire of the present invention comprises vulcanizing a casing portion comprising a belt portion composed of multiple belt layers, a belt under-cushion rubber, a side portion and a bead portion to prepare a tire casing, vulcanizing a tread member comprising at least a tread portion to prepare a precured tread member, and thereafter bonding the tire casing and the precured tread member and integrally vulcanizing and molding them to give a tire, wherein a rubber composition containing carbon black having a nitrogen adsorption specific surface area of from 25 to 90 m$^2$/g as defined in JIS K 6217-2:2001 in an amount of from 25 to 45 parts by mass per 100 parts by mass of the rubber component therein is used as the belt under-cushion rubber.

In this aspect, the precured tread member is a tread member that has been previously vulcanized.

In the production method for a tire of the present invention, the tire casing and the tread member are separately produced and therefore the optimum vulcanization condition for the tread member can be defined separately from that for the tire casing. Combining the formulations for the tire casing and the precured tread member each satisfying the individual vulcanization condition has made is possible to produce a tire satisfying both low-heat-generation property and durability.

The reason why the nitrogen adsorption specific surface area of the carbon black must be from 25 to 90 m$^2$/g is because, when it is at least 25 m$^2$/g, then the strength of the belt under-cushion rubber can be secured; and when at most 90 m$^2$/g, then the low-heat-generation property and the fatigue resistance of the belt under-cushion rubber are good and, falling within the range, the low-heat-generation property and the durability of the tire can be thereby improved. From these viewpoints, the nitrogen adsorption specific surface area is preferably within a range of from 25 to 85 m$^2$/g.

The reason why the amount of the carbon black to be incorporated must be from 25 to 45 parts by mass is because, when the amount is at least 25 parts by mass, then the strength of the belt under-cushion rubber can be secured; and when at most 45 parts by mass, then the low-heat-generation property and the fracture resistance of the belt under-cushion rubber are good and, falling within the range, the low-heat-generation property and the durability of the tire can be thereby improved. From these viewpoints, the amount of the carbon black to be incorporated is more preferably within a range of from 25 to 40 parts by mass.

From the above-mentioned viewpoints, the amount of the carbon black to be incorporated is more preferably within a range of from 28 to 40 parts by mass, even more preferably from 30 to 35 parts by mass. In particular, when FEF (nitrogen adsorption specific surface area: 40 to 42 m$^2$/g) to be mentioned below is used as the carbon black, the amount thereof to be incorporated is preferably from 30 to 35 parts by mass.

<Configuration of Tire>

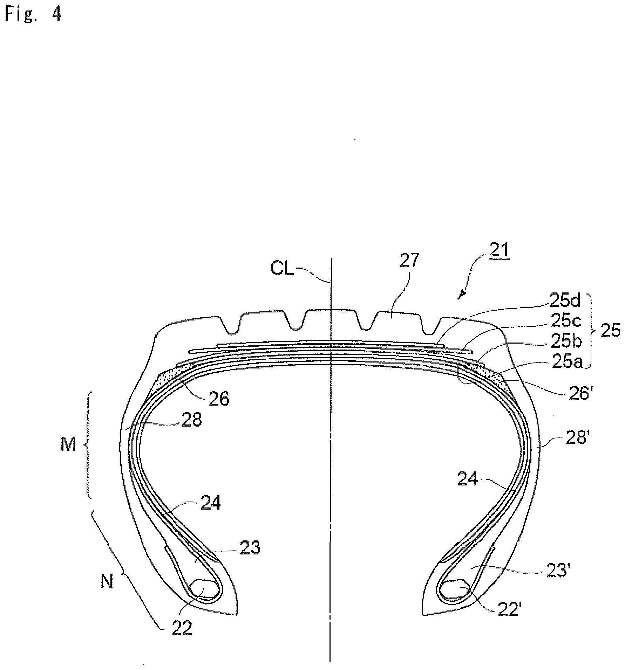

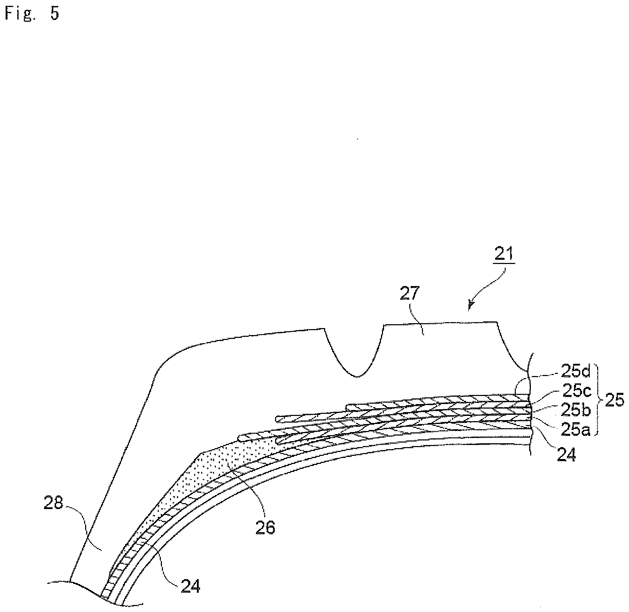

The members of the tire in the production method of the present invention are described below. Fig. 4 is a schematic cross-sectional view showing one example of a tire obtained according to the production method of the present invention; and Fig. 5 is a partly-cut, schematic cross-sectional view showing the belt portion of one example of a tire obtained according to the production method of the present invention.

In the case of the tire 21, stiffeners 23 and 23' extend outside in the tire radial direction from a pair of bead cores 22 and 22', respectively, and a belt portion 25 comprising multiple belt layers (four layers of an innermost belt layer 25a, an inside belt layer 25b to form a crossing layer, an outside belt layer 25c to form a crossing layer, and an outermost belt layer 25d) is arranged outside in the tire radial direction of the carcass ply 24 that is folded from the bead core 22 outside the stiffener 23 to form a toroidal tire casing form and folded at the bead core 22' on the opposite side and fixed outside the stiffener 23' , thereby forming a tire casing. Belt under-cushion rubbers 26 and 26' are arranged inside in the tire radial direction on both sides of the belt portion 25 and outside in the tire radial direction of the carcass ply 24, and a tread portion 27 is arranged outside in the tire radial direction of the belt portion 25. Outside the carcass ply 24 and between the tread portion 27 and the stiffener 23, arranged are sidewall rubbers 28 and 28'. The area in which the sidewall rubbers 28 and 28' are arranged is referred to as a side portion M, and the inside in the tire radial direction of the side portion M is referred to as a bead portion N. In the bead portion N, there are arranged the bead cores 22 and 22' and the stiffeners 23 and 23', etc.

The belt under-cushion rubber 26 is described in more detail. As shown in Fig. 5, the belt under-cushion rubber 26 extends from the inside in the tire radial direction of the innermost belt layer 25a to the inside in the tire radial direction of the inner belt layer 25b to form a crossing layer and to the inside in the tire radial direction of the tread portion 27 along the outside in the tire radial direction of the carcass ply 24, and further extends in the area between the sidewall rubber 28 and the carcass ply 24.

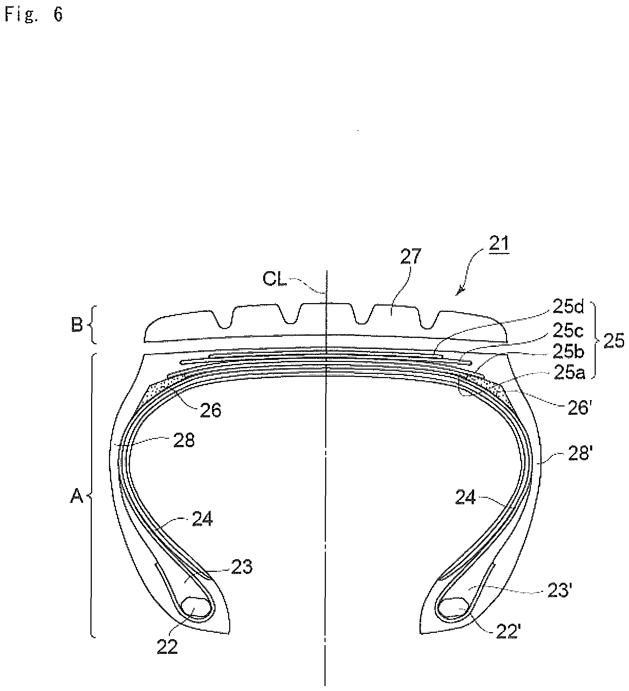

Fig. 6 is a schematic cross-sectional view showing one example of the tire casing A and the precured tread member B for use in the production method of the present invention. In the present invention, the casing portion comprising at least the belt portion 25, the belt under-cushion rubber 26, the side portion M and the bead portion N is vulcanized to form the tire casing A. In general, in the tire casing A, there is arranged a thin layer of a part of tread rubber outside in the tire radial direction of the belt portion 25. This is for bettering the bonding of the tire casing to the precured tread member B.

<Belt Under-Cushion Rubber Composition>

(Carbon Black)

In the present invention, the rubber composition for the belt under-cushion rubber 26 contains carbon black having a nitrogen adsorption specific surface area of from 25 to 90 $m^2/g$ as defined in JIS K 6217-2:2001. As the carbon black, for example, there are mentioned HAF (nitrogen adsorption specific surface area: 75 to 80 $m^2/g$), HS-HAF (nitrogen adsorption specific surface area: 78 to 83 $m^2/g$), LS-HAF (nitrogen adsorption specific surface area: 80 to 85 $m^2/g$), FEF (nitrogen adsorption specific surface area: 40 to 42 $m^2/g$), GPF (nitrogen adsorption specific surface area: 26 to 28 $m^2/g$), SRF (nitrogen adsorption specific surface area: 25 to 28 $m^2/g$), N339 (nitrogen adsorption specific surface area: 88 to 96 $m^2/g$), LI-HAF (nitrogen adsorption specific surface area: 73 to 75 $m^2/g$), etc. Of those, preferred are HAF, HS-HAF, LS-HAF, FEF, LI-HAF and GPF.

(Silica)

In this embodiemnt, if desired, silica may be incorporated in the rubber composition of the belt under-cushion rubber 26, in addition to carbon black. Preferably, silica is incorporated in an amount of at most 10 parts by mass per 100 parts by mass of the rubber component in the rubber composition of the belt under-cushion rubber 26.

In particular, in case where FEF (nitrogen adsorption specific surface area: 40 to 42 $m^2/g$) is used as the carbon black, the amount of silica to be incorporated is preferably from 4 to 6 parts by mass.

Any commercially-available silica is usable here, but above all, preferred is precipitated silica, fumed silica or colloidal silica, and more preferred is precipitated silica. Preferably, the BET specific surface area (as measured according to ISO 5794/1) of silica for use herein is from 40 to 350 $m^2/g$. Silica of which the BET specific surface area falls within the range is advantageous in that it satisfies both rubber-reinforcing capability and dispersibility in the rubber component. From this viewpoint, silica of which the BET specific surface area falls within a range of from 80 to 350 $m^2/g$ is more preferred; silica of which the BET specific surface area falls within a range of from 120 to 350 $m^2/g$ is even more preferred. As silicas of those types, usable here are commercial products of Tosoh Silica's trade names "Nipsil AQ" (BET specific surface area = 220 $m^2/g$) and "Nipsil KQ"; Degussa's trade name "Ultrasil VN3" (BET specific surface area = 175 $m^2/g$), etc.

(Rubber Component)

As the rubber component for use in the rubber composition for the belt under-cushion rubber 26 in the present invention, preferred is any one of natural rubber and synthetic polyisoprene rubber (IR), and more preferred is natural rubber. In combined use with any other synthetic rubber, it is desirable that natural rubber accounts for at least 60% by mass of the rubber component, more preferably at least 70% by mass, even more preferably at least 80% by mass. Especially preferred is use of natural rubber alone.

The other synthetic rubber includes polybutadiene rubber (BR), styrene-butadiene copolymer (SBR), styrene-isoprene copolymer (SIR), etc.

(Adhesion Promoter)

Preferably, the rubber composition for the belt under-cushion rubber 26 in the present invention contains an organic acid cobalt salt in an amount of at most 0.4 parts by mass as the cobalt amount per 100 parts by mass of the rubber component therein, more preferably in an amount of from 0.01 to 0.4 parts by mass, even more preferably from 0.02 to 0.3 parts by mass. When an organic acid cobalt salt is incorporated in an amount of at most 0.4 parts by mass as the cobalt amount, then the aging resistance of the rubber composition of the belt under-cushion rubber 26 can be favorably prevented from lowering. Incorporating an organic acid cobalt salt in an amount of at least 0.01 parts by mass as the cobalt amount is more preferred as increasing the initial adhesiveness of the composition.

The organic acid cobalt salt includes cobalt naphthenate, cobalt rosinate, cobalt stearate, other cobalt salts of linear or branched monocarboxylic acids having from 5 to 20 carbon atoms or so (for example, trade name "Manobond C" Series by OM Group Inc.), etc.

(Vulcanizing Agent)

Preferably, in the rubber composition for the belt under-cushion rubber 26 in the present invention, sulfur is incorporated as a vulcanizing agent, in an amount of at most 7.0 parts by mass per 100 parts by mass of the rubber component therein. More preferably, the amount falls within a range of from 3.0 to 7.0 parts by mass, even more preferably from 4.0 to 6.0 parts by mass. Incorporating sulfur in an amount of at most 7.0 parts by mass can favorably prevent the aging resistance of the rubber composition of the belt under-cushion 26 from lowering. Incorporating sulfur in an amount of at least 3.0 parts by mass is more preferred as improving the initial adhesiveness of the composition.

(Other Additives)

In addition to the above-mentioned components, any other additives, for example, a vulcanization activator such as zinc flower, organic acid (stearic acid, etc.) or the like, a vulcanization accelerator, an inorganic filler except silica, an antiaging agent, an ozone degradation inhibitor, a softening agent or the like may be added to the rubber composition for the belt under-cushion rubber 26 in the present invention.

As the vulcanization accelerator, preferably used here is a sulfenamide-type accelerator such as N,N'-dicyclohexyl-2-benzothiazolylsulfenamide, N-cyclohexyl-2-benzothiazolylsulfenamide, N-tert-butyl-2-benzothiazolylsulfenamide, N-oxydiethylene-2-benzothiazolylsulfenamide, etc. If desired, also usable are a thiazol-type accelerator such as 2-mercaptobenzothiazole, di-2-benzothiazolyl disulfide, etc.; a thiuram-type accelerator such as tetrabenzylthiuram disulfide, tetramethylthiuram disulfide, tetraethylthiuram disulfide, tetrakis(2-ethylhexyl)thiuram disulfide, tetramethylthiuram monosulfide, etc.

As commercial products of vulcanization accelerators, usable here are N-cyclohexyl-2-benzothiazolylsulfenamide (Ouchi Shinko Chemical Industry's trade name "Nocceler CZ) and N,N-dicyclohexyl-2-benzothiazolylsulfenamide (Ouchi Shinko Chemical Industry's trade name "Nocceler DZ).

The amount of the antiaging agent to be incorporated is preferably from 1 to 3 parts by mass per 100 parts by mass of the rubber component in the composition.

<Vulcanizate Physical Property of Belt Under-Cushion Rubber 26>

Tan$\delta$ of the belt under-cushion 26 is preferably at most 0.17 from the viewpoint of improving the low-heat-generation property thereof. Here tan$\delta$ is a value to be measured as follows: Using Toyo Seiki's spectrometer (dynamic viscoelastometer), around the center part (latest vulcanization point) of the belt under-cushion rubber of the tire to be analyzed is tested for tan$\delta$ under an initial load of 160 g and at a frequency of 52 Hz, a measurement temperature of 23°C and a strain of 2%.

<Production Method for Tire>

(Production of Tire Casing)

In producing the rubber composition for the belt under-cushion rubber 26 in the present invention, used is a Banbury mixer, a roll, an intensive mixer or the like as the kneading apparatus.

In case where the casing portion is vulcanized in producing the tire casing A in the production method of the present invention, first an unvulcanized casing portion is formed. The casing portion can be formed in the same manner as that for a forming process for a green tire in a known tire production method. For example, a carcass ply rubberized with unvulcanized rubber is wound around a forming drum, a bead core is set around both ends thereof, and thereafter the two ends are folded, and further unvulcanized rubber of a sidewall portion is stuck thereto. Next, the center part in the width direction is expanded to form a toroidal form of which the cross section is horseshoe, and thereafter an unvulcanized belt layer is arranged around the outer periphery of the carcass layer, and a thin layer of the same rubber composition as that of the inner layer of the tread portion 27 is stuck thereonto to provide a casing portion.

The casing portion is set in a vulcanization device (mold), and vulcanized and molded therein to thereby produce the tire casing A having a part of the tread portion 27 or not having the tread portion 27 at all.

In the production method of the present invention, the vulcanization method for the casing portion (unvulcanized tire casing A) is a method of surrounding the outside of the casing portion by the use of the vulcanization mold, and the casing portion is vulcanized and molded in such a manner that the bead portion side of the casing portion is heated by a first heating means, the belt portion side of the casing portion is heated by a second heating means, and the quantity of heat per unit volume to be given to the belt portion side by the second heating means is smaller than the quantity of heat per unit volume to be given to the bead portion side by the first heating means.

In ordinary heavy loading tires (for example, pneumatic radial tires for trucks or busses), the thickness of the belt portion side of the casing portion is small as compared with the maximum thickness of the bead portion N, and therefore there exists a latest vulcanization point inside the bead portion N. As described above, when a small quantity of heat per unit volume is given to the belt portion side and a large quantity of heat per unit volume is given to the bead portion side, then the belt portion side is not overvulcanized, and favorably as a result, the fracture resistance of the belt under-cushion 26 after long-term running of the tire betters, $\tan\delta$ thereof lowers and the low-heat-generation property of the tire betters.

Regarding the means of imparting a small quantity of heat per unit volume to the belt portion side and imparting a large quantity of heat per unit volume to the bead portion side, in case where the casing portion is vulcanized to produce the tire casing A, for example, the casing portion is put into a vulcanization mold, and pressure and heat are given thereto from inside the casing portion by the use of a vulcanization bladder therein. In this case, from the first heating means for the part of the vulcanization mold that faces the bead portion N of the casing portion, the casing portion may be heated at a higher temperature, and from the second heating means for the part of the vulcanization mold that faces the belt portion side of the casing portion, the casing portion may be heated at a lower temperature than from the first heating means.

In the production method of the present invention, preferably, the ultimate temperature of the outermost belt layer 25d in the belt portion 25 (especially the latest vulcanization point of the outermost belt layer 25d) during vulcanization of the casing portion is from 110 to 160°C, and the ultimate temperature of the bead portion N (especially the latest vulcanization point of the bead portion N) is from 125 to 180°C, and the ultimate temperature at the latent vulcanization point of the outermost belt layer 25d in the belt portion 25 is lower by from 2 to 25°C than the ultimate temperature at the latest vulcanization point of the bead portion N, more preferably by from 4 to 25°C, even more preferably by from 4 to 20°C. This is for preventing the belt portion side from being overvulcanized and for improving the low-heat-generation property of the belt under-cushion rubber 26.

When the ultimate temperature of the outermost belt layer 25d (especially at the latest vulcanization point of the outermost belt layer 25d) is 110°C or higher, then the vulcanization can go on favorably; and when 160°C or lower, then the initial adhesiveness to steel cords can favorably better. When the ultimate temperature of the bead portion N (especially at the latest vulcanization point of the bead portion N) is 125°C or higher, then the vulcanization time for the tire casing A can be favorably shortened; and when 180°C or lower, the durability of the bead portion can favorably better.

(Production of Precured Tread Member)

In case where the precured tread member B is produced, a tread material of an unvulcanized rubber of which the cross section in the width direction is nearly trapezoidal is extruded through an extruder (not shown), and then cut in a predetermined length, and thereafter the thus-cut strip-shaped tread material is set in a vulcanization mold composed of, for example, an upper mold portion and a lower mold potion, and vulcanized therein to give a ring-shaped precured tread member B. In this stage, formed are multiple grooves each extending in the lengthwise direction of the ring-shaped outer surface of the precured tread member B.

Regarding the vulcanization condition, preferably, the tread material is vulcanized at from 100 to 185°C or so for a period of time for which the precured tread member B can be completely cured.

(Bonding of Tire Casing and Precured Tread Member)

In the tire casing A and the precured tread member B produced in the manner as above, the tire casing surface that has been kept in contact with the mold surface during molding has the property of hardly crosslinking with the unvulcanized rubber, and therefore for removing (cutting off) the surface layer rubber of the outer surface to be the adhesive face between the tire casing A and the precured tread member B for the purpose of securing the adhesiveness therebetween, it is desirable that the adhesive face between the tire casing A and the precured tread member B is previously buffed by the use of a buffing machine or the like.

Next, the tire casing A and the precured tread member B are bonded together and integrally vulcanized and molded to give the tire 21. In this stage, it is desirable that the tire casing A and the precured tread member B are bonded via an unvulcanized adhesive rubber layer (as one example, the cushion rubber layer 7), and vulcanized and molded. The unvulcanized adhesive rubber layer may be an ordinary sheet-like adhesive rubber, or a liquid rubber may be applied to the adhesive face to form the unvulcanized adhesive rubber layer thereon.

In the rubber composition, if desired, various chemicals used in ordinary rubber industry, such as carbon black as a reinforcing filler, as well as a softening agent (oil), an antiaging agent, a crosslinking agent such as sulfur or the like may be suitably incorporated, in addition to rubber components, various vulcanization accelerator components and a crosslinking component used in ordinary rubber compositions. As the rubber component, usable is natural rubber (NR) or synthetic rubber either singly or as combined. The synthetic rubber includes, for example, synthetic polyisoprene rubber, polybutadiene rubber (BR), styrene-butadiene rubber (SBR), butyl rubber, halogenobutyl rubber, etc. As the rubber composition, preferred here is use of a tread rubber composition (especially tread base rubber composition).

Next, the tire casing A to which the precured tread member B has been stuck is conveyed into a vulcanization apparatus not shown (for example, a vulcanizer or a steam pan), in which the unvulcanized adhesive rubber layer is vulcanized to give the tire 21. In this stage, the precured tread member B is co-vulcanized and bonded to the outer periphery of the crown portion of the tire casing A.

The vulcanization condition is preferably at from 60 to 140°C or so and for a period of time for which the adhesive rubber can be completely vulcanized.

During the vulcanization, it is desirable that the ultimate temperature at the center of the belt under-cushion rubber (at the latest vulcanization point of the belt under-cushion rubber) in bonding the tire casing A and the precured tread member B together and integrally vulcanizing them is lower than the ultimate temperature at the center of the belt under-cushion rubber (at the latest vulcanization point of the belt under-cushion rubber) in vulcanizing the casing portion. This is for the purpose of optimizing the degree of vulcanization in vulcanizing the casing portion and the total degree of vulcanization in vulcanizing the tire casing A and the precured tread member B so that they could not be excessively too high, whereby the fracture resistance of the belt under-cushion rubber composition can be improved.

Examples

The invention is described in more detail with reference to Examples given below, however, the invention is not limited to the following Examples.

[Evaluation Methods]

The low rolling resistance, tanδ, the peeling resistance after long-term running, and the fracture resistance after long-term running of the tire were evaluated according to the methods mentioned below.

<Low Rolling Resistance>

Each trial tire was tested in a drum test for the resistance occurring on the tire tread in the running direction in running at a speed of 80 km/hr. The value of Comparative Example 1 was referred to as 100, and the value of each tested tire was expressed as an index according to the formula mentioned below. The tires having a larger value have a smaller rolling resistance and are better.

$$\text{Low Rolling Resistance Index} = \{(\text{rolling resistance of the tire of Comparative Example 1})/(\text{rolling resistance of tested tire})\} \times 100$$

<Peeling Resistance after long-term running>

After running under a heat-generation durable drum load of 100% for 24 hours at 60 km/hr, the tire was tested in a peeling test for the peeling resistance (adhesion power) between the crown portion of the precured tire casing and the cushion rubber layer. The test condition of the peeling test is as follows:
Test Sample: Rubber test piece having a size of 25 mm width x 200 mm length, as cut out of the belt layer of the tire after running.

Tester and Test Method: The sample was set in an autograph tester with its one end kept nipped by the chuck of the tester, and peeled in the lengthwise direction at a pulling speed of 50 ± 2.5 mm/min, whereupon the tensile force was measured. The value of Comparative Example 1 was referred to as an index 100, based on which the data of the other samples were expressed as index indication. The samples having a larger index have larger peeling resistance.

<Fracture Resistance after long-term running of tire>

A molded and vulcanized trial tire was tested according to a drum test for 2 hours, in which the tire was given a normal inner pressure, a normal load and a side force of 15 kN at a speed of 60 km/hr in an atmosphere at 40°C, and after the test, the belt under-cushion rubber around the center of the belt under-cushion rubber (latest vulcanization point) was cut out. Thus cut out, the JIS No. 7 test piece was tested for the tensile stress at break (TSb) according to JIS K 6251:2004, at 23°C and at a pulling rate of 200 ± 20 mm/min. Based on the value 100 of Comparative Example 1, the data of the tested samples were expressed as index indication according to the formula mentioned below. The samples having a larger index value have better fracture resistance.

$$\text{Fracture Resistance Index after long-term running of}$$
$$\text{tire} = \{(\text{tensile stress at break (TSb) of tested}$$
$$\text{sample})/(\text{tensile stress at break (TSb) of Comparative Example}$$
$$1)\} \times 100$$

[Examples and Comparative Examples]

<Examples 1 to 9, and Comparative Examples 1 to 19>

As in Table 1 showing the formulations of rubber compositions, rubber compositions for use in Examples 1 to 9 and Comparative Examples 1 to 19 were produced according to an ordinary method. The rubber composition was vulcanized in the manner of simulating the outermost belt layer temperature in tire vulcanization (in two-stage vulcanization, both temperatures in two stages) thereby preparing test pieces for measurement of tan δ. The temperature at the crown center position of the tread casing in tire vulcanization was simulated by burying a thermocouple in the crown center position of the tread casing and measuring the temperature change relative to the vulcanization time in the vulcanization method for a tire having a tire size of 11R22.5 mentioned below, and by feeding back the results to the vulcanization temperature for the test piece. Tan δ was measured according to the above-mentioned method. The results are shown in Table 2.

Next, the rubber compositions of Examples 1 to 9 and Comparative Examples 4, 5, 6, 8, 10 and 19 each having the formulation as in Table 1 were used for tread casing 8b' in Fig. 2 to prepare unvulcanized casing portions, for which the tire size was 11R 22.5 in all cases. The casing portion was vulcanized according to a method of surrounding the casing portion from the outside by a vulcanization mold and pressurizing and heating it from the inside by the use of a vulcanization bladder (pressurizing with high-pressure steam at 150°C), thereby producing a tire casing. In this stage, the first heating means of the vulcanization mold block that faced the bead portion side of the casing portion was kept at 170°C, and the second heating means of the vulcanization mold block that faced the belt portion side of the casing portion was kept at 140°C. Accordingly, the quantity of heat per unit volume to be given to the belt portion side by the second heating means was made smaller than the quantity of heat per unit volume to be given to the bead portion side by the first heating means. The ultimate temperature at the latest vulcanization point of the crown center position of the tread casing was 140°C, and the ultimate temperature at the latest vulcanization point of the bead portion was 155°C. The vulcanization time was 30 minutes in every case.

Separately, a precured tread member was prepared through vulcanization molding under heat to have a tread pattern previously given thereto.

Next, the bonding face of the tire casing and that of the precured tread member were buffed with a buffing machine, and then a cushion rubber to bond the tire casing and the precured tread member was produced according to the formulation shown in Table 1. The unvulcanized cushion rubber sheet was stuck to the bonding face of the tire casing.

Next, each precured tread member was stuck to each tire casing, and thereafter vulcanized in a vulcanization apparatus at 120°C for 2 hours, thereby giving a tire with the tire casing and the precured tread member bonding together. In this case, the ultimate temperature at the latest vulcanization point of the crown center position of the tread casing was 120°C.

Thus produced, those tires (tire size 11R 22.5) were evaluated for the low rolling resistance according to the above-mentioned method. The evaluation results are shown in Table 2.

Next, the rubber compositions of Comparative Examples 1 to 3, 7, 9 and 11 to 18 among the above were used for the tread casing 8b' to prepare unvulcanized casing portions, for which the tire size was 11R 22.5 in all cases. An unvulcanized tread member was stuck to the outside in the tire radial direction of the unvulcanized casing portion, thereby producing unvulcanized tires. The unvulcanized tires were vulcanized according to ordinary one-stage vulcanization to give tires.

Thus produced, the tires (tire size 11R 22.5) were evaluated for the low rolling resistance according to the above-mentioned method. The evaluation results are shown in Table 2.

[Table 1]

Table 1

| Formulation (part by mass) | Rubber Composition for Adherend Layer | Cushion Rubber |
|---|---|---|
| Natural Rubber | As in Table 2 | 100 |
| Butadiene Rubber | | - |
| Carbon Black | | 35 *1 |
| Silica | | - |
| Spindle Oil | - | 10 |
| Antiaging Agent *2 | 2 | 2 |
| Organic Acid Cobalt Salt *3 | - | - |
| Zinc Flower | 3 | 5 |
| Stearic Acid | 2 | 3 |
| Accelerator CZ *4 | 0.8 | - |
| Accelerator TBzTD *5 | - | 0.2 |
| Accelerator NS *6 | - | 0.8 |
| Accelerator M *7 | - | 0.5 |
| Sulfur | 2 | 3 |

[Notes]
*1: HAF (N-330), Asahi Carbon's trade name "Asahi#70" (nitrogen adsorption specific surface area: 77 m$^2$/g)
*2: N-(1,3-dimethylbutyl)-N'-phenyl-p-phenylenediamine, Ouchi Shinko Chemical Industry's trade name "Nocrac 6C"
*3: OM Group's trade name "Manobond C225" (registered trademark) (cobalt content 22.5%)
*4: N-cyclohexyl-2-benzothiazolylsulfenamide, Ouchi Shinko Chemical Industry's trade name "Nocceler CZ"
*5: Tetrabenzylthiuram disulfide, Sanshin Chemical Industry's trade name "Sanceler TBZTD"
*6: N-tert-butyl-2-benzothiazolylsulfenamide, Sanshin Chemical Industry's trade name "Sanceler NS"
*7: 2-mercaptobenzothiazole, Ouchi Shinko Chemical Industry's trade name "Nocceler M-P"

[Table 2]

## Table 2

| Tread Casing (part by mass) | | Example | | | | | | | | | Comparative Example | | | | | | | | | | | | | | | | | | |
|---|---|---|---|---|---|---|---|---|---|---|---|---|---|---|---|---|---|---|---|---|---|---|---|---|---|---|---|---|---|
| | | 1 | 2 | 3 | 4 | 5 | 6 | 7 | 8 | 9 | 1 | 2 | 3 | 4 | 5 | 6 | 7 | 8 | 9 | 10 | 11 | 12 | 13 | 14 | 15 | 16 | 17 | 18 | 19 |
| Formulation | Natural rubber | 70 | 100 | 70 | 70 | 70 | 70 | 70 | 70 | 70 | 70 | 50 | 70 | 70 | 70 | 70 | 70 | 70 | 70 | 70 | 70 | 70 | 70 | 70 | 70 | 70 | 70 | 70 | 70 |
| | Butadiene Rubber *8 | 30 | - | 30 | 30 | 30 | 30 | 30 | 30 | 30 | 30 | 50 | 30 | 30 | 30 | 30 | 30 | 30 | 30 | 30 | 30 | 30 | 30 | 30 | 30 | 30 | 30 | 30 | 30 |
| | Carbon Black HAF *9 | 35 | 35 | - | 30 | 30 | 30 | 45 | - | - | 35 | 35 | 25 | - | - | - | - | - | - | - | - | - | - | - | - | - | 30 | 45 | 25 |
| | Carbon Black FEF *10 | - | - | 35 | - | - | - | - | 30 | 40 | - | - | - | 50 | 20 | - | - | - | - | - | - | 20 | 30 | 35 | 40 | 50 | - | - | - |
| | Carbon Black GPF *11 | - | - | - | - | - | - | - | - | - | - | - | - | - | - | 35 | - | - | - | - | 35 | - | - | - | - | - | - | - | - |
| | Carbon Black SAF *13 | - | - | - | - | - | - | - | - | - | - | - | - | - | - | - | 35 | 35 | - | - | - | - | - | - | - | - | - | - | - |
| | Carbon Black SRF-LS *14 | - | - | - | - | - | - | - | - | - | - | - | - | - | - | - | - | - | 35 | 35 | - | - | - | - | - | - | - | - | - |
| | Silica *12 | - | - | - | 10 | 5 | - | - | - | - | - | - | - | - | - | - | - | - | - | - | - | - | - | - | - | - | - | - | - |
| Vulcanization Method | | 2-stage vulcanization | 2-stage vulcanization | 2-stage vulcanization | 2-stage vulcanization | 2-stage vulcanization | 2-stage vulcanization | 2-stage vulcanization | 2-stage vulcanization | 2-stage vulcanization | 1-stage vulcanization | 1-stage vulcanization | 1-stage vulcanization | 2-stage vulcanization | 2-stage vulcanization | 2-stage vulcanization | 1-stage vulcanization | 2-stage vulcanization | 1-stage vulcanization | 2-stage vulcanization | 1-stage vulcanization | 1-stage vulcanization | 1-stage vulcanization | 1-stage vulcanization | 1-stage vulcanization | 1-stage vulcanization | 1-stage vulcanization | 1-stage vulcanization | 2-stage vulcanization |
| Evaluation Results | Low Rolling Resistance (index) | 103 | 102 | 104 | 102 | 103 | 104 | 102 | 105 | 103 | 100 | 101 | 104 | 99 | 105 | 106 | 96 | 97 | 106 | 107 | 105 | 104 | 104 | 103 | 102 | 98 | 102 | 97 | 105 |
| | Cracking Resistance after Long-Term Running (index) | 108 | 126 | 104 | 128 | 111 | 105 | 135 | 102 | 106 | 100 | 76 | 62 | 98 | 70 | 98 | 99 | 106 | 65 | 90 | 80 | 55 | 85 | 90 | 95 | 93 | 80 | 105 | 95 |

16

EP 2 633 986 B1

[Notes]

*8: Ube Kosan's cis-1,4-polybutadiene rubber, trade name "UBEPOL 150L"

*9: HAF(N-330), Asahi Carbon's trade name "Asahi #70" (nitrogen adsorption specific surface area: 77 $m^2$/g)

*10: FEF(N-550), Asahi Carbon's trade name "Asahi #60" (nitrogen adsorption specific surface area: 40 $m^2$/g)

*11: GPF(N-660), Asahi Carbon's trade name "Asahi #55" (nitrogen adsorption specific surface area: 26 $m^2$/g)

*12: Tosoh Silica's trade name "Nipsil AQ" (BET specific surface area: 220 $m^2$/g)

*13: SAF(N-110), Tokai Carbon's trade name "Seast 9SAF" (nitrogen adsorption specific surface area: 142 $m^2$/g)

*14: SRF-LS(N-110), Tokai Carbon's trade name "Seast SP SRF-LS" (nitrogen adsorption specific surface area: 23 $m^2$/g)

As obvious from Table 2, the tires of Examples 1 to 9 all exhibited excellent low rolling resistance and peeling resistance as compared with the comparative tires of Comparative Examples 1 to 19.

<Examples 11 to 20, and Comparative Examples 21 to 38>

As in Table 3 and Table 4 each showing the formulations of belt under-cushion rubber compositions, belt under-cushion rubber compositions for use in Examples 11 to 20 and Comparative Examples 21 to 38 were produced according to an ordinary method.

Next, the rubber compositions of Examples 11 to 20 and Comparative Examples 27, 30, 32 and 36 among the above were used for the respective belt under-cushion rubbers to prepare unvulcanized casing portions, with a tire size of 11R22. 5 being commonly applied. The casing portion was vulcanized according to a method of surrounding the casing portion from the outside by a vulcanization mold and pressurizing and heating it from the inside by the use of a vulcanization bladder (pressurizing with high-pressure steam at 150°C), thereby producing a tire casing. In this stage, the first heating means of the vulcanization mold block that faced the bead portion side of the casing portion was kept at 170°C, and the second heating means of the vulcanization mold block that faced the belt portion side of the casing portion was kept at 140°C. Accordingly, the quantity of heat per unit volume to be given to the belt portion side by the second heating means was made smaller than the quantity of heat per unit volume to be given to the bead portion side by the first heating means. The ultimate temperature at the latest vulcanization point of the outermost belt layer was 140°C, the ultimate temperature at the center (at the latest vulcanization point) of the belt under-cushion rubber was 140°C, and the vulcanization point at the latest vulcanization point of the bead portion was 155°C. The vulcanization time was 30 minutes in every case.

Separately, a precured tread member was prepared through vulcanization molding under heat at 160°C to have a tread pattern previously given thereto.

Next, the bonding face of the tire casing and that of the precured tread member were buffed with a buffing machine, and then an adhesive rubber to bond the tire casing and the precured tread member was produced according to the formulation shown in Table 3. The unvulcanized adhesive rubber sheet was stuck to the bonding face of the tire casing.

Next, each precured tread member was stuck to each tire casing, and thereafter vulcanized in a vulcanization apparatus at 120°C for 2 hours, thereby giving a tire with the tire casing and the precured tread member bonding together. In this case, the ultimate temperature at the latest vulcanization point of the outermost belt layer was 120°C, and the ultimate temperature at the center (at the latest vulcanization point) of the belt under-cushion rubber was 120°C.

Thus produced, those tires (tire size 11R 22.5) were evaluated for the low rolling resistance and the fracture resistance after long-term running of the tire, according to the above-mentioned methods. The evaluation results are shown in Table 4.

Next, the rubber compositions of Comparative Examples 21 to 26, 28, 29, 31, 33 to 35, 37 and 38 among the above were used for the belt under-cushion rubber to prepare unvulcanized casing portions, for which the tire size was 11R 22.5 in all cases. An unvulcanized tread member was stuck to the outside in the tire radial direction of the unvulcanized casing portion, thereby producing unvulcanized tires. The unvulcanized tires were vulcanized according to ordinary one-stage vulcanization to give tires.

Thus produced, the tires (tire size 11R 22.5) were evaluated for the low rolling resistance and the fracture resistance after long-term running of the tire, according to the above-mentioned methods. The evaluation results are shown in Table 4.

[Table 3]

Table 3

| Formulation (part by mass) | Belt Under-Cushion Rubber | Adhesive Rubber |
|---|---|---|
| Natural Rubber | 100 | 100 |
| Carbon Black | As in Table 4 | 35 *1 |
| Silica | | - |
| Spindle Oil | - | 10 |
| Antiaging Agent *2 | 1 | 2 |
| Zinc Flower | 3 | 5 |
| Stearic Acid | 2 | 3 |
| Accelerator CZ *3 | 1 | - |
| Accelerator TBzTD *4 | - | 0.2 |
| Accelerator NS *5 | - | 0.8 |
| Accelerator M *6 | - | 0.5 |
| Sulfur | 1.5 | 3 |
| [Notes]<br>*1 : HAF (N-330), Asahi Carbon's trade name "Asahi#70" (nitrogen adsorption specific surface area: 77 m$^2$/g)<br>*2: N-(1,3-dimethylbutyl)-N'-phenyl-p-phenylenediamine, Ouchi Shinko Chemical Industry's trade name "Nocrac 6C"<br>*3: N-cyclohexyl-2-benzothiazolylsulfenamide, Ouchi Shinko Chemical Industry's trade name "Nocceler CZ"<br>*4: Tetrabenzylthiuram disulfide, Sanshin Chemical Industry's trade name "Sanceler TBZTD"<br>*5: N-tert-butyl-2-benzothiazolylsulfenamide, Sanshin Chemical Industry's trade name "Sanceler NS"<br>*6: 2-mercaptobenzothiazole, Ouchi Shinko Chemical Industry's trade name "Nocceler M-P" | | |

[Table 4]

## Table 4

| Belt Under-Cushion Rubber (part by mass) | | Example | | | | | | | | | | Comparative Example | | | | | | | | | | | | | | | | | |
|---|---|---|---|---|---|---|---|---|---|---|---|---|---|---|---|---|---|---|---|---|---|---|---|---|---|---|---|---|---|
| | | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 | 34 | 35 | 36 | 37 | 38 |
| Formulation | Natural rubber | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 |
| | Carbon Black N330 *7 | - | - | 35 | 35 | - | - | - | - | 30 | 40 | 35 | - | - | 35 | - | - | - | - | - | - | - | - | - | - | - | - | 30 | 40 |
| | Carbon Black N550 *8 | - | 35 | - | - | 30 | 25 | 30 | 40 | - | - | - | - | 35 | - | 30 | 25 | 20 | 20 | - | - | - | - | 20 | 30 | 40 | 20 | - | - |
| | Carbon Black N660 *9 | 35 | - | - | - | - | - | - | - | - | - | - | 35 | - | - | - | - | - | - | - | - | - | - | - | - | - | - | - | - |
| | Carbon Black SAF *11 | - | - | - | - | - | - | - | - | - | - | - | - | - | - | - | - | - | - | 35 | 35 | - | - | - | - | - | - | - | - |
| | Carbon Black SRF-LS *12 | - | - | - | - | - | - | - | - | - | - | - | - | - | - | - | - | - | - | - | - | 35 | 35 | - | - | - | - | - | - |
| | Silica *10 | - | - | - | - | 5 | 10 | - | - | - | - | - | - | - | - | 5 | 10 | - | - | - | - | - | - | - | - | - | - | - | - |
| Vulcanization Method | | 2-stage vulcanization | 2-stage vulcanization | 2-stage vulcanization | 2-stage vulcanization | 2-stage vulcanization | 2-stage vulcanization | 2-stage vulcanization | 2-stage vulcanization | 2-stage vulcanization | 2-stage vulcanization | 1-stage vulcanization | 1-stage vulcanization | 1-stage vulcanization | 1-stage vulcanization | 1-stage vulcanization | 1-stage vulcanization | 2-stage vulcanization | 1-stage vulcanization | 1-stage vulcanization | 2-stage vulcanization | 1-stage vulcanization | 2-stage vulcanization | 1-stage vulcanization | 1-stage vulcanization | 1-stage vulcanization | 2-stage vulcanization | 1-stage vulcanization | 1-stage vulcanization |
| Evaluation Results | Low Rolling Resistance (index) | 104 | 102 | 101 | 101 | 102 | 104 | 103 | 100 | 102 | 100 | 100 | 102 | 101 | 98 | 101 | 102 | 104 | 103 | 90 | 92 | 103 | 105 | 104 | 102 | 100 | 105 | 100 | 97 |
| | Fracture Resistance after Long-Term Running of Tire (index) | 101 | 104 | 110 | 107 | 103 | 101 | 101 | 107 | 107 | 113 | 100 | 88 | 93 | 100 | 94 | 93 | 90 | 82 | 96 | 105 | 84 | 94 | 88 | 91 | 95 | 95 | 98 | 103 |

[Notes]

*7: HAF(N-330), Asahi Carbon's trade name "Asahi #70" (nitrogen adsorption specific surface area: 77 m$^2$/g)

*8: FEF(N-550), Asahi Carbon's trade name "Asahi #60" (nitrogen adsorption specific surface area: 40 m$^2$/g)

*9: GPF(N-660), Asahi Carbon's trade name "Asahi #55" (nitrogen adsorption specific surface area: 26 m$^2$/g)

*10: Tosoh Silica's trade name "Nipsil AQ" (BET specific surface area: 220 m$^2$/g)

*11: SAF(N-110), Tokai Carbon's trade name "Seast 9SAF" (nitrogen adsorption specific surface area: 142 m$^2$/g)

*12: SRF-LS(N-110), Tokai Carbon's trade name "Seast SP SRF-LS" (nitrogen adsorption specific surface area: 23 m$^2$/g)

As obvious from Table 4, the tires having belt under-cushion rubber of Examples 11 to 20 all had good low rolling resistance and fracture resistance after long-term running of tire as compared with the comparative tires having belt under-cushion rubber of Comparative Examples 21 to 38.

## Claims

1. A method for producing a tire casing (A) by vulcanizing a casing portion comprising a belt portion (5) composed of multiple belt layers (5a-5d), a side portion (M) and a bead portion (N) and also comprising at least any one of a tread casing (8b') and a belt under-cushion rubber(26), wherein:
   a rubber composition containing carbon black having a nitrogen adsorption specific surface area of from 25 to 130 m$^2$/g as defined in JIS K 6217-2:2001 in an amount of from 25 to 45 parts by mass per 100 parts by mass of the rubber component therein is used as at least the rubber composition constituting the tread casing (8b') or the rubber composition constituting the belt under-cushion rubber (26), **characterised in that** the casing portion is vulcanized by surrounding the outside of the casing portion by the use of a vulcanization mold having a first heating means for heating the bead portion side of the casing portion and a second heating means for heating the belt portion side of the casing portion and wherein the quantity of heat per unit volume to be given to the belt portion side by the second heating means is smaller than the quantity of heat per unit volume to be given to the bead portion side by the first heating means.

2. The method for producing a tire casing (A) according to claim 1, wherein a rubber composition containing carbon black having a nitrogen adsorption specific surface area of from 35 to 130 m$^2$/g as defined in JIS K 6217-2:2001 in an amount of from 25 to 45 parts by mass per 100 parts by mass of the rubber component therein is used as the rubber composition constituting the tread casing (8b').

3. The method for producing a tire casing according to claim 1, wherein a rubber composition containing carbon black having a nitrogen adsorption specific surface area of from 25 to 90 m$^2$/g as defined in JIS K 6217-2:2001 in an amount of from 25 to 45 parts by mass per 100 parts by mass of the rubber component therein is used as the rubber composition constituting the belt under-cushion rubber (26).

**4.** The method for producing a tire casing according to any of claims 1 to 3, wherein, in vulcanizing the casing portion, the ultimate temperature at the crown center position of the tread casing (8b') is from 110 to 160°C and the ultimate temperature of the bead portion (N) is from 125 to 180°C, and wherein the ultimate temperature at the crown center position of the tread casing is lower by from 2 to 25°C than the ultimate temperature of the bead portion.

**5.** The method for producing a tire casing according to any of claims 1 to 3, wherein, in vulcanizing the casing portion, the ultimate temperature of the outermost belt layer (5d) positioned outermost of the belt portion (5) is from 110 to 160°C and the ultimate temperature of the bead portion is from 125 to 180°C, and wherein the ultimate temperature of the outermost belt layer positioned outermost of the belt portion is lower by from 2 to 25°C than the ultimate temperature of the bead portion.

**6.** The method for producing a tire casing according to any of claims 1 to 5, wherein tan$\delta$ of the rubber composition is at most 0.09 as tested under an initial load of 160 g and at a frequency of 52 Hz, a measurement temperature of 23°C and a strain of 2%.

**7.** A method for producing a tire by separately forming a tire casing (A) produced by vulcanizing a casing portion comprising a belt portion (5) composed of multiple belt layers (5a-5d), a side portion (M) and a bead portion (N) and also comprising at least any one of a tread casing (8b') and a belt under-cushion rubber (26), and a precured tread member (B), then bonding the tire casing (A) and the precured tread member (B) and vulcanizing them, wherein: a rubber composition containing carbon black having a nitrogen adsorption specific surface area of from 25 to 130 m$^2$/g as defined in JIS K 6217-2:2001 in an amount of from 25 to 45 parts by mass per 100 parts by mass of the rubber component therein is used as at least the rubber composition constituting the tread casing (8b') or the rubber composition constituting the belt under-cushion rubber (26), **characterised in that** the casing portion is vulcanized by surrounding the outside of the casing portion by the use of a vulcanization mold having a first heating means for heating the bead portion side of the casing portion and a second heating means for heating the belt portion side of the casing portion and wherein the quantity of heat per unit volume to be given to the belt portion side by the second heating means is smaller than the quantity of heat per unit volume to be given to the bead portion side by the first heating means.

**8.** The method for producing a tire according to claim 7, wherein the ultimate temperature at the crown center position of the adherend layer in bonding and vulcanizing the tire casing and the precured tread member (B) is lower than the ultimate temperature at the crown center position of the adherend layer in vulcanizing the casing portion.

**9.** The method for producing a tire according to claim 7, wherein the ultimate temperature at the crown center position of the belt under-cushion rubber (26) in bonding and vulcanizing the tire casing (A) and the precured tread member (B) is lower than the ultimate temperature at the crown center position of the belt under-cushion rubber in vulcanizing the casing portion.

**10.** The method for producing a tire according to any of claims 7 to 9, wherein the tire casing (A) and the precured tread member (B) are bonded via an unvulcanized cushion rubber layer (7) and then vulcanized.

**11.** The method for producing a tire according to any of claims 7 to 10, wherein the rubber composition contains silica in an amount of at most 10 parts by mass per 100 parts by mass of the rubber component therein.

**12.** The method for producing a tire according to any of claims 7 to 11, wherein tan $\delta$ of the rubber composition is at most 0.09 as tested under an initial load of 160 g and at a frequency of 52 Hz, a measurement temperature of 23°C and a strain of 2%.

**Patentansprüche**

**1.** Verfahren zur Herstellung einer Reifendecke (A) durch Vulkanisieren eines Deckenteils, umfassend einen Gürtelteil (5), bestehend aus mehreren Gürtellagen (5a-5d), einen seitlichen Teil (M) und einen Wulstteil (N) und weiterhin umfassend zumindest eines von einer Laufflächendecke (8b') und einem Gürtel-Unterkissen-Kautschuk (26), wobei: eine Kautschukzusammensetzung, die Industrieruß, mit einer spezifischen Stickstoffadsorptionsfläche von 25 bis 130 m$^2$/g gemäß Definition in JIS K 6217-2:2001, in einer Menge von 25 bis 45 Masseteilen pro 100 Masseteile der Kautschukkomponente in derselben enthält, als zumindest die die Laufflächendecke (8b') bildende Kautschukzusammensetzung oder die den Gürtel-Unterkissen-Kautschuk (26) bildende Kautschukzusammensetzung verwendet wird, **dadurch gekennzeichnet, dass** der Deckenteil vulkanisiert wird, indem die Außenseite des Deckenteils durch die Verwendung einer Vulkanisationsform umgeben wird, die ein erstes Heizmittel zum Erhitzen der Wulstteilseite des Deckenteils und ein zweites Heizmittel zum Erhitzen der Gürtelteilseite des Deckenteils aufweist, und wobei die Menge an Wärme pro Volumeneinheit, die an die Gürtelteilseite durch das zweite Heizmittel abzugeben ist, geringer ist als die Menge an Wärme pro Volumeneinheit, die an die Wulstteilseite durch das erste Heizmittel abzugeben ist.

2. Verfahren zur Herstellung einer Reifendecke (A) nach Anspruch 1, wobei eine Kautschukzusammensetzung, die Industrieruß, mit einer spezifischen Stickstoffadsorptionsfläche von 35 bis 130 m$^2$/g gemäß Definition in JIS K 6217-2:2001, in einer Menge von 25 bis 45 Masseteilen pro 100 Masseteile der Kautschukkomponente in derselben enthält, als die die Laufflächendecke (8b') bildende Kautschukzusammensetzung verwendet wird.

3. Verfahren zur Herstellung einer Reifendecke nach Anspruch 1, wobei eine Kautschukzusammensetzung, die Industrieruß, mit einer spezifischen Stickstoffadsorptionsfläche von 25 bis 90 m$^2$/g gemäß Definition in JIS K 6217-2:2001, in einer Menge von 25 bis 45 Masseteilen pro 100 Masseteile der Kautschukkomponente in derselben enthält, als die den Gürtel-Unterkissen-Kautschuk (26) bildende Kautschukzusammensetzung verwendet wird.

4. Verfahren zur Herstellung einer Reifendecke nach einem der Ansprüche 1 bis 3, wobei, beim Vulkanisieren des Deckenteils, die Endtemperatur an der Scheitelmitteposition der Laufflächendecke (8b') 110 bis 160 °C beträgt und die Endtemperatur des Wulstteils (N) 125 bis 180 °C beträgt, und wobei die Endtemperatur an der Scheitelmitteposition der Laufflächendecke um 2 bis 25 °C niedriger ist als die Endtemperatur des Wulstteils.

5. Verfahren zur Herstellung einer Reifendecke nach einem der Ansprüche 1 bis 3, wobei, beim Vulkanisieren des Deckenteils, die Endtemperatur der äußersten Gürtellage (5d), in äußerster Position des Gürtelteils (5), 110 bis 160 °C beträgt und die Endtemperatur des Wulstteils 125 bis 180 °C beträgt, und wobei die Endtemperatur der äußersten Gürtellage, in äußerster Position des Gürtelteils, um 2 bis 25 °C niedriger ist als die Endtemperatur des Wulstteils.

6. Verfahren zur Herstellung einer Reifendecke nach einem der Ansprüche 1 bis 5, wobei tan$\delta$ der Kautschukzusammensetzung höchstens 0,09 gemäß Test unter einer Anfangslast von 160 g und bei einer Frequenz von 52 Hz, einer Messtemperatur von 23 °C und einer Dehnung von 2% beträgt.

7. Verfahren zur Herstellung eines Reifens durch separates Bilden einer Reifendecke (A), hergestellt durch Vulkanisieren eines Deckenteils, umfassend einen Gürtelteil (5), bestehend aus mehreren Gürtellagen (5a-5d), einen seitlichen Teil (M) und einen Wulstteil (N) und weiterhin umfassend zumindest eines von einer Laufflächendecke (8b') und einem Gürtel-Unterkissen-Kautschuk (26), und eines vorgehärteten Laufflächenelements (B), dann Zusammenfügen der Reifendecke (A) und des vorgehärteten Laufflächenelements (B) und Vulkanisieren von ihnen, wobei: eine Kautschukzusammensetzung, die Industrieruß, mit einer spezifischen Stickstoffadsorptionsfläche von 25 bis 130 m$^2$/g gemäß Definition in JIS K 6217-2:2001, in einer Menge von 25 bis 45 Masseteilen pro 100 Masseteile der Kautschukkomponente in derselben enthält, als zumindest die die Laufflächendecke (8b') bildende Kautschukzusammensetzung oder die den Gürtel-Unterkissen-Kautschuk (26) bildende Kautschukzusammensetzung verwendet wird, **dadurch gekennzeichnet, dass** der Deckenteil vulkanisiert wird, indem die Außenseite des Deckenteils durch die Verwendung einer Vulkanisationsform umgeben wird, die ein erstes Heizmittel zum Erhitzen der Wulstteilseite des Deckenteils und ein zweites Heizmittel zum Erhitzen der Gürtelteilseite des Deckenteils aufweist, und wobei die Menge an Wärme pro Volumeneinheit, die an die Gürtelteilseite durch das zweite Heizmittel abzugeben ist, geringer ist als die Menge an Wärme pro Volumeneinheit, die an die Wulstteilseite durch das erste Heizmittel abzugeben ist.

8. Verfahren zur Herstellung eines Reifens nach Anspruch 7, wobei die Endtemperatur an der Scheitelmitteposition der adhärenten Lage beim Zusammenfügen und Vulkanisieren der Reifendecke und des vorgehärteten Laufflächenelements (B) niedriger ist als die Endtemperatur an der Scheitelmitteposition der adhärenten Lage beim Vulkanisieren des Deckenteils.

9. Verfahren zur Herstellung eines Reifens nach Anspruch 7, wobei die Endtemperatur an der Scheitelmitteposition des Gürtel-Unterkissen-Kautschuks (26) beim Zusammenfügen und Vulkanisieren der Reifendecke (A) und des vorgehärteten Laufflächenelements (B) niedriger ist als die Endtemperatur an der Scheitelmitteposition des Gürtel-Unterkissen-Kautschuks beim Vulkanisieren des Deckenteils.

10. Verfahren zur Herstellung eines Reifens nach einem der Ansprüche 7 bis 9, wobei die Reifendecke (A) und das vorgehärtete Laufflächenelement (B) via eine unvulkanisierte Kissenkautschuklage (7) zusammengefügt und dann vulkanisiert werden.

11. Verfahren zur Herstellung eines Reifens nach einem der Ansprüche 7 bis 10, wobei die Kautschukzusammensetzung Silica in einer Menge von höchstens 10 Masseteilen pro 100 Masseteile der Kautschukkomponente in derselben enthält.

12. Verfahren zur Herstellung eines Reifens nach einem der Ansprüche 7 bis 11, wobei tan$\delta$ der Kautschukzusammensetzung höchstens 0,09 gemäß Test unter einer Anfangslast von 160 g und bei einer Frequenz von 52 Hz, einer Messtemperatur von 23 °C und einer Dehnung von 2% beträgt.

**Revendications**

1. Méthode pour la production d'une carcasse de pneumatique (A) par la vulcanisation d'une portion de carcasse comprenant une portion de ceinture (5) composée de multiples couches de ceinture (5a-5d), une portion de flanc (M) et une portion de talon (N) et comprenant également au moins l'un quelconque parmi une carcasse de bande de roulement (8b') et un caoutchouc de sous-coussin de ceinture (26) dans laquelle:
une composition de caoutchouc contenant un noir de carbone possédant une surface active spécifique par adsorption d'azote de 25 à 130 m$^2$/g telle que définie dans JIS K 6217-2:2001 dans une quantité de 25 à 45 parties en masse pour 100 parties en masse du composant de caoutchouc à l'intérieur est utilisée comme au moins la composition de caoutchouc constituant la carcasse de bande de roulement (8b') ou la composition de caoutchouc constituant le caoutchouc de sous-coussin de ceinture (26), **caractérisée en ce que** la portion de carcasse est vulcanisée en entourant l'extérieur de la portion de carcasse par l'utilisation d'un moule de vulcanisation ayant un premier moyen de chauffage pour chauffer le côté de portion de talon de la portion de carcasse et un second moyen de chauffage pour chauffer le côté de portion de ceinture de la portion de carcasse et dans laquelle la quantité de chaleur par unité de volume devant être donnée au côté de portion de ceinture par le second moyen de chauffage est inférieure à la quantité de chaleur par unité de volume devant être donnée au côté de portion de talon par le premier moyen de chauffage.

2. Méthode pour la production d'une carcasse de pneumatique (A) selon la revendication 1, dans laquelle une composition de caoutchouc contenant un noir de carbone possédant une surface active spécifique par adsorption d'azote de 35 à 130 m$^2$/g telle que définie dans JIS K 6217-2:2001 dans une quantité de 25 à 45 parties en masse pour 100 parties en masse du composant de caoutchouc à l'intérieur est utilisée comme la composition de caoutchouc constituant la carcasse de bande de roulement (8b').

3. Méthode pour la production d'une carcasse de pneumatique selon la revendication 1, dans laquelle une composition de caoutchouc contenant un noir de carbone possédant une surface active spécifique par adsorption d'azote de 25 à 90 m$^2$/g telle que définie dans JIS K 6217-2:2001 dans une quantité de 25 à 45 parties en masse pour 100 parties en masse du composant de caoutchouc à l'intérieur est utilisée comme la composition de caoutchouc constituant le caoutchouc de sous-coussin de ceinture (26).

4. Méthode pour la production d'une carcasse de pneumatique selon l'une quelconque des revendications 1 à 3, dans laquelle, dans la vulcanisation de la portion de carcasse, la température finale à la position centrale de couronne de la carcasse de bande de roulement (8b') est de 110 à 160°C et la température finale de la portion de talon (N) est de 125 à 180°C et dans laquelle la température finale à la position centrale de couronne de la carcasse de bande de roulement est inférieure de 2 à 25°C à la température finale de la portion de talon.

5. Méthode pour la production d'une carcasse de pneumatique selon l'une quelconque des revendications 1 à 3, dans laquelle, dans la vulcanisation de la portion de carcasse, la température finale de la couche de ceinture la plus à l'extérieur (5d) positionnée le plus à l'extérieur de la portion de ceinture (5) est de 110 à 160°C et la température finale de la portion de talon est de 125 à 180°C et dans laquelle la température finale de la couche de ceinture la plus à l'extérieur positionnée le plus à l'extérieur de la portion de ceinture est inférieure de 2 à 25°C à la température finale de la portion de talon.

6. Méthode pour la production d'une carcasse de pneumatique selon l'une quelconque des revendications 1 à 5, dans laquelle tan$\delta$ de la composition de caoutchouc est au maximum 0,09 comme il est testé sous une charge initiale de 160 g et à une fréquence de 52 Hz, une température de mesure de 23°C et une déformation de 2%.

**7.** Méthode pour la production d'un pneumatique par la formation séparée d'une carcasse de pneumatique (A) produite par la vulcanisation d'une portion de carcasse comprenant une portion de ceinture (5) composée de multiples couches de ceinture (5a-5d), une portion de flanc (M) et une portion de talon (N) et comprenant également au moins l'un quelconque parmi une carcasse de bande de roulement (8b') et un caoutchouc de sous-coussin de ceinture (26), et d'un élément de bande de roulement précuit (B), puis le collage de la carcasse de pneumatique (A) et de l'élément de bande de roulement précuit (B) et leur vulcanisation, dans laquelle:
une composition de caoutchouc contenant un noir de carbone possédant une surface active spécifique par adsorption d'azote de 25 à 130 $m^2$/g telle que définie dans JIS K 6217-2:2001 dans une quantité de 25 à 45 parties en masse pour 100 parties en masse du composant de caoutchouc à l'intérieur est utilisée comme au moins la composition de caoutchouc constituant la carcasse de bande de roulement (8b') ou la composition de caoutchouc constituant le caoutchouc de sous-coussin de ceinture (26), **caractérisée en ce que** la portion de carcasse est vulcanisée en entourant l'extérieur de la portion de carcasse par l'utilisation d'un moule de vulcanisation ayant un premier moyen de chauffage pour chauffer le côté de portion de talon de la portion de carcasse et un second moyen de chauffage pour chauffer le côté de portion de ceinture de la portion de carcasse et dans laquelle la quantité de chaleur par unité de volume devant être donnée au côté de portion de ceinture par le second moyen de chauffage est inférieure à la quantité de chaleur par unité de volume devant être donnée au côté de portion de talon par le premier moyen de chauffage.

**8.** Méthode pour la production d'un pneumatique selon la revendication 7, dans laquelle la température finale à la position centrale de couronne de la couche collante dans le collage et la vulcanisation de la carcasse de pneumatique et de l'élément de bande de roulement précuit (B) est inférieure à la température finale à la position centrale de couronne de la couche collante dans la vulcanisation de la portion de carcasse.

**9.** Méthode pour la production d'un pneumatique selon la revendication 7, dans laquelle la température finale à la position centrale de couronne du caoutchouc de sous-coussin de ceinture (26) dans le collage et la vulcanisation de la carcasse de pneumatique (A) et de l'élément de bande de roulement précuit (B) est inférieure à la température finale à la position centrale de couronne du caoutchouc de sous-coussin de ceinture dans la vulcanisation de la portion de carcasse.

**10.** Méthode pour la production d'un pneumatique selon l'une quelconque des revendications 7 à 9, dans laquelle la carcasse de pneumatique (A) et l'élément de bande de roulement précuit (B) sont collés via une couche de caoutchouc de coussin non vulcanisée (7) et ensuite vulcanisés.

**11.** Méthode pour la production d'un pneumatique selon l'une quelconque des revendications 7 à 10, dans laquelle la composition de caoutchouc contient de la silice dans une quantité d'au maximum 10 parties en masse pour 100 parties en masse du composant de caoutchouc à l'intérieur.

**12.** Méthode pour la production d'un pneumatique selon l'une quelconque des revendications 7 à 11, dans laquelle tan$\delta$ de la composition de caoutchouc est au maximum 0,09 comme il est testé sous une charge initiale de 160 g et à une fréquence de 52 Hz, une température de mesure de 23°C et une déformation de 2%.

Fig. 1

Fig. 2

Fig. 3

Fig. 4

Fig. 5

Fig. 6

**EP 2 633 986 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002069237 A
- EP 1743755 A1
- JP 2010144067 A
- JP 2007211152 A
- JP 2004148986 A
- JP 2008037310 A
- JP 8258179 A
- JP 2000079640 A
- JP 2006111072 A